# EUROPEAN PATENT SPECIFICATION

(11) **EP 4 222 373 B1**
(45) Date of publication and mention of the grant of the patent: **03.07.2024**
(21) Application number: 21785854.7
(22) Date of filing: 28.09.2021
(51) Int. Cl.: F03D 80/50

(54) **HOIST ARRANGEMENT FOR A WIND TURBINE BLADE ACCESS PLATFORM**
HEBEANORDNUNG FÜR EINE WINDTURBINENSCHAUFELZUGANGSPLATTFORM
AGENCEMENT DE LEVAGE DESTINÉ À UNE PLATEFORME D'ACCÈS À UNE PALE D'ÉOLIENNE

(30) Priority: 01.10.2020 DK PA202070669
(43) Date of publication of application: 09.08.2023
(73) Proprietor: PP Energy ApS, 6430 Nordborg (DK)
(72) Inventor: JUNKER, Peter Moos, 6000 Kolding (DK)
(74) Representative: Keil & Schaafhausen Patentanwälte PartGmbB
(86) International application number: PCT/EP2021/076613
(87) International publication number: WO 2022/069455

(56) References cited:
- WO-A1-2007/085265
- WO-A2-2004/081373
- CN-A- 104 743 451
- KR-A- 20130 143 418

## Description

### Field of the invention

The present invention relates to a blade access arrangement for a rotor blade of a wind power plant having a tower, the arrangement comprising a platform having two sides extending from a front end to a back end of the platform, tower guide means for guiding the platform against the tower, a bar arrangement comprising one or more bars connecting the platform with the tower guiding means and a hoisting arrangement for hoisting the blade access arrangement up and down, which hoisting arrangement comprises a pair of hoisting means placed on each side of the platform.

### Background of the invention

Such a blade access arrangement is known, for example, from US 2019/0010714 A1. A platform comprising three sub-platforms connected and with a hoisting arrangement comprising three lifting devices placed at the platform one at each of the sub platforms. It is challenging to control the platform in a horizontal plane in all positions of the platform. Especially in the situation where the platform is moving from the tower towards the blade and even more challenging when platform is moved closer to the blade tip where the distance between tower and blade is at its maximum.

In most wind power plants, the tip of a downwardly pointing blade has a larger distance to the tower than the root of the blade. Blade access arrangements therefore have a tower guiding means for guiding the platform against the tower and a bar arrangement connecting the platform with the tower guiding means. Platforms for blade access is made to carry persons and equipment for servicing and/or for repairing the blade. A stable and horizontal movement of the platform is essential, when the platform moves along the tower, when the platform move from the tower towards the blade and essentially, when the platform moves up or down enclosing the blade profile. Other prior art solutions are disclosed in documents WO 2007/085265 A1 and KR 2013 0143418 A.

### Objective of the invention

The object of the invention is to provide a blade access arrangement where the platform in all positions moves horizontal and controlled even when the platform is moved in a horizontal direction in relation to anchor points on the wind power plant.

This object is solved by a blade access arrangement as described above where the hoisting arrangement comprises a further hoisting means placed on a hoisting arm, which arm is connected pivotably to the back end of the platform, the back end of the platform being the end closest to the tower guide means.

A hoisting arm connected pivotably at the back end of the platform secure that the hoisting arm acts as a kind of self-centering suspension point positioning itself in relation to a distance and angle from one or more anchor points on the wind power plant to find a position determined by resulting forces from a wire rope secured to an anchor point. Hereby it is also possible to account for variance in centre of gravity of the platform and for the whole blade access arrangement.

In an embodiment of the invention the hoisting arm is connected pivotably to the back end of the platform by an upper and a lower pivoting joint for at least partly pivoting around a substantially vertical axis through the upper and lower pivoting points.

In an embodiment of the invention the pivotable hoisting arm is connected to the platform in a corner area of the back end of the platform.

Hereby it is possible for the hoisting arm to find a position determined by the resulting forces from the anchor point to which a wire rope of the hoisting means is secured. The direction of the resulting forces of the wire rope depends on in which distance the platform is positioned in relation to the tower and to the anchor point depending on the platform being positioned at the blade tip or root.

In an embodiment of the invention the upper and lower pivoting joints are slidable connected to the back end of the platform in such a way that the pivoting joints can be positioned in a position between corners of the back end of the platform.

Hereby it is possible to adjust a connection point between the hoisting arm and the back end of the platform in relation to the anchor point on the wind power plant.

The connection point should be understood as the substantially vertical axis through the upper and lower pivoting points.

In an embodiment of the invention the slidable connection is provided with a locking means for locking the pivoting joints to the back end of the platform in such a way that sliding is blocked.

This allows for selecting a certain position of the connection point between the hoisting arm and the back end of the platform in relation to the anchor point on the wind power plant.

In an embodiment of the invention the hoisting arm is hinged in the pivoting joints in such a way, that resulting forces from a wire rope coupled to the hoisting means, determines a position of the hoisting arm.

This reduces the risk of uneven load on the platform thereby minimizing risk of an unwanted tilting of the platform or overloading of a suspension point.

In an embodiment of the invention the pivotable hoisting arm is connected to the platform in a center area between corners of the back end of the platform.

Hereby it is possible to adjust the connection points of the pivotable hoisting arm to the platform in relation to an anchor point on the wind power plant for the wire rope of the hoist placed at the rear part or back end of the platform.

In an embodiment of the invention the pivotable hoisting arm is connected to the platform by a further arm or extended frame, placing the pivoting joints in a position on an outer side of the bar arrangement connecting the platform with the tower guiding means.

Hereby it is possible to compensate for a possible uneven drag from the wire rope if the anchor point on the wind power plant is placed offset in relation to a vertical axis along which the platform is moved when mowing up or down.

In an embodiment of the invention the hoisting arm comprises a first frame part and a second frame part, which first frame part is connected to the upper pivot joint in one end and to the second frame part in an opposite end, the second frame part is in one end connected to the first frame part and in an opposite end to the lower pivot joint, the first frame part and/or second frame part is adjustable in length.

This also makes it possible to compensate for an uneven drag from the wire rope if the anchor point on the wind power plant is placed offset in relation to a vertical axis along which the platform is moved when mowing up or down.

In an embodiment of the invention the first and second frame parts is provided with a wire pulley for guiding a wire rope connected to the hoisting means.

The tower guide means is connected to a bar arrangement, which bar arrangement comprises one or more bars.

The bar or bars is displaceable in relation to the platform in order to adjust the distance of the platform from the tower of the wind power plant in such a way the platform can be placed in a distance from the tower being capable of surrounding or at least partly surround a blade of a wind turbine in order to carry persons and or machinery enabling maintenance work on the blade.

When displacing the bars in relation to the platform and when changing position of the platform in lengthwise direction of the blade, the direction of the resulting forces changes. Having the pivotable arm following the direction of the resulting forces, reduces the risk of an uneven load on the platform caused by a skewed pull from the wire rope connected to the hoist placed on the pivotable arm.

The blade access arrangement is hoisted by hoisting means connected to the platform. A hoisting device could for example be a winding gear or an electric powered wire rope hoist.

In an embodiment of the invention the hoisting arrangement comprising further suspension points placed at the platform preferably at least three suspension points, one at the rear end of the platform and two at the platform. The two platform suspensions are typically placed opposite each other on the sides of the platform. The suspension points from the platform can be stationary suspension points or suspension points movable along the sides of the platform.

In an embodiment, the hoisting means or platform suspensions are placed on each side of the platform and connected pivotably to the respective sides of the platform.

In an embodiment, the hoisting means are placed on pivotable arms, which arms are connected pivotably to the respective sides of the platform by upper and a lower pivoting joints for at least partly pivoting around a substantially vertical axis through the upper and lower pivoting points.

Hereby it is possible to provide improved stability of the platform in that the arms follows the angle of the wire rope in such a way that resulting forces from the wire rope coupled to the hoisting means determines the position of the arms in relation to the platform.

In an embodiment, the the pivotable arms are provided with an actuator connected between the arms and the platform.

Hereby it is possible to change distance between the wire ropes supporting the central part of the platform and give a further possibility of manoeuvring the platform in relation to the rotor blade.

In an embodiment, the hoisting means are placed on each side of the platform and pivoting joints formed as swivel joints, are placed above the sides of the platform.

Hereby is achieved, that the pivoting joints are placed above the sides of the platform giving improved stability.

Effects and features of the different embodiments are to a large extent analogous to those described above in connection with the first embodiment.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a blade access arrangement in a position with the platform close to the tower;
Figure 2 shows a view from above of a cross section along the line II-II in figure 1;
Figure 3 shows an enlarged view of the rear part of the platform with a pivotable hoisting arm marked by the circle III in figure 2;
Figure 4 shows a blade access arrangement in a position with the platform moved away from the tower;
Figure 5 shows a view from above of a cross section along the line V-V in figure 4;
Figure 6 shows an enlarged view of the rear part of the platform with the pivotable hoisting arm marked by the circle VI in figure 5;
Figure 7 shows a blade access arrangement in a position with the platform moved further away from the tower;
Figure 8 shows a view from above of a cross section along the line VIII-VIII in figure 7;
Figure 9 shows an enlarged view of the rear part of the platform with the pivotable hoisting arm marked by the circle IX in figure 8;
Figure 10 shows the platform seen from a side with the pivotable hoisting arm at the back end;
Figure 11 shows the pivotable hoisting arm in an enlarged view marked by the circle XI in figure 10;
Figure 12 shows the platform seen from above with the pivotable hoisting arm at the back end;
Figure 13 shows the pivotable hoisting arm in an enlarged view marked by the circle XIII in figure 12;
Figure 14 shows an enlarged view of figure 2;
Figure 15 shows an enlarged view of figure 5;
Figure 16 shows an enlarged view of figure 8;
Figure 17 shows the platform without bar arrangement seen from above with the pivotable hoisting arm at the back end and pivotable hoisting means at both sides of the platform;
Figure 18 shows the platform without bar arrangement seen from a front end with the pivotable hoisting arm at the back end and pivotable hoisting means at both sides of the platform;
Figure 19 shows a pivotable hoisting means in an enlarged view marked by the circle XIX in figure 17;
Figure 20 shows the platform, without bar arrangement, seen from a side with the pivotable hoisting arm at the back end and pivotable hoisting means at both sides of the platform, formed as swivel joints;
Figure 21 shows the platform of figure 20 seen from a front end with the swivel joints in a narrow configuration;
Figure 22 shows a pivotable hoisting means formed as a swivel joint in an enlarged view marked by the circle XXII in figure 21;
Figure 23 shows the platform of figure 20 seen from a front end with the swivel joints in a wide configuration;
Figure 24 shows a pivotable hoisting means formed as a swivel joint in an enlarged view marked by the circle XXIV in figure 23;
Figure 25 shows the platform of figure 20 seen from above with the swivel joints in a narrow configuration;
Figure 26 shows a pivotable hoisting means formed as a swivel joint in an enlarged view marked by the circle XXVI in figure 25;
Figure 27 shows the platform of figure 20 seen from above with the swivel joints in a wide configuration; and
Figure 28 shows a pivotable hoisting means formed as a swivel joint in an enlarged view marked by the circle XXVIII in figure 27.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

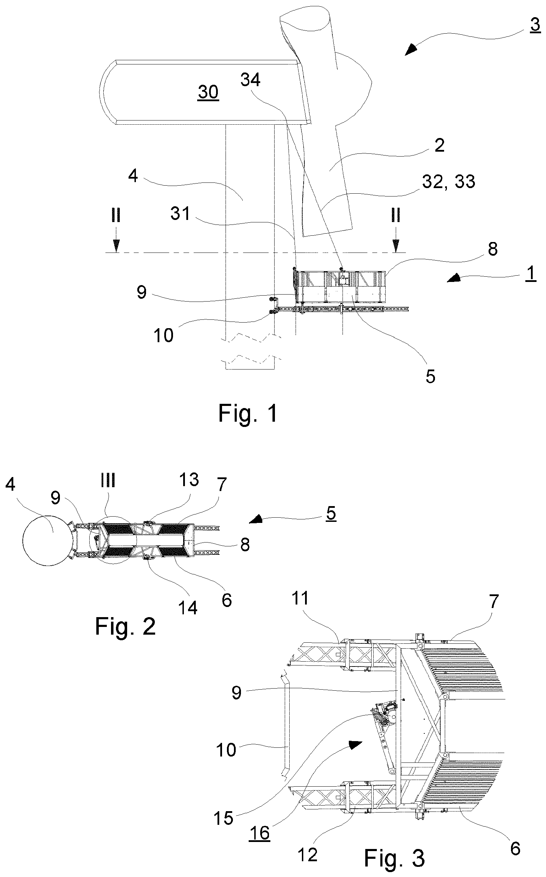

Figure 1, 2 and 3 shows a blade access arrangement 1 for a rotor blade 2 of a wind power plant 3. The wind power plant 3 has a tower 4. A nacelle 30 is arranged on top of the tower 4. The blade 2 is fixed to a hub of a rotor, which is rotatably supported in the nacelle 30, the rotor comprising a number of blades 2.

The blade access arrangement 1 comprises a platform 5, The platform 5 has two sides 6, 7 extending from a front end 8 to a back end 9 of the platform 5 and is connected to tower guide means 10 which rest against the tower 4. The tower guide means 10 can be provided with rollers so that the tower guide means can guide the platform 5 along the tower 4. The tower guide means 10 are connected to the platform 5 by means of a bar arrangement 11, 12, which bar arrangement 11, 12 connects the platform 5 with the tower guiding means 10 and a hoisting arrangement for hoisting the blade access arrangement 1 up and down. The hoisting arrangement comprises a pair of hoisting means 13, 14 placed on each side 6, 7 of the platform 5. The hoisting arrangement 13, 14 comprises a further hoisting means 15 which is placed on a hoisting arm 16. The hoisting arm 16 is connected pivotably to the back end 9 of the platform 5, the back end 9 of the platform 5 being the end closest to the tower guide means 10.

The hoisting arm 16 being connected pivotably at the back end 9 of the platform 5 ensures that hoisting arm 16 acts as a kind of self-centering suspension point positioning itself in relation to a distance and angle from one or more anchor points on the wind power plant 3 to find a position determined by resulting forces from a wire rope 31 secured to an anchor point 34.

Wire ropes 31, 32, 33 does not necessarily need to be connected to the same anchor point 34. Anchor points 34 can be placed at both sides of the nacelle 30 or distributed from one side of the nacelle 30 to the other. In some embodiments anchor points can be placed on the rotor (rotor hub) or around one or more of the blades.

In an embodiment of the invention the hoisting arm 16 is connected pivotably to the back end 9 of the platform 5 by an upper 17 and a lower 18 pivoting joint for at least partly pivoting around a substantially vertical axis through the upper and lower pivoting points 17, 18.

In an embodiment of the invention the pivotable hoisting arm 16 is connected to the platform 5 in a corner area of the back end 9 of the platform 5. The corner area being one of the corners of the back end 9 of the platform 5.

This makes it possible for the hoisting arm 16 to find a position determined by the resulting forces from the anchor point 34 to which a wire rope 31 of the hoisting means 15 of the hoisting arm 16 is secured. The direction of the resulting forces of the wire rope 31 depends on in which distance the platform 5 is positioned in relation to the tower 4 and to the anchor point 34 depending on the platform 5 being positioned at the blade tip or root.

In an embodiment of the invention the upper and lower pivoting joints 17, 18 are slidable connected to the back end 9 of the platform 5 in such a way that the pivoting joints 17, 18 can be positioned in a position between corners of the back end 9 of the platform 5.

This makes it possible to adjust a connection point between the hoisting arm 16 and the back end 9 of the platform 5 in relation to the anchor point 34 on the nacelle 30 of wind power plant 3.

The connection point should be understood as the substantially vertical axis through the upper and lower pivoting points 17, 18.

In an embodiment of the invention the slidable connection is provided with a locking means for locking the pivoting joints 17, 18 to the back end 9 of the platform 5 in such a way that sliding is blocked. Such locking means can be a locking split, a bolt connection (screw and nut) or a clamp connection.

This allows for selecting a certain position of the connection point between the hoisting arm 16 and the back end 9 of the platform 5 in relation to the anchor point 34 on the wind power plant 3.

In an embodiment of the invention, the hoisting arm 16 is hinged in the pivoting joints 17, 18 in such a way, that resulting forces from the wire rope 31 coupled to the hoisting means 15 of the hoisting arm 16, determines a position of the hoisting arm 16.

This reduces the risk of uneven load on the platform 5 thereby minimizing the risk of an unwanted tilting of the platform 5.

In an embodiment of the invention, the pivotable hoisting arm 16 is connected to the platform 5 in a center area between corners of the back end 9 of the platform 5. The center area being the area between the corners of the back end 9 of the platform 5.

This makes it possible to adjust the connection points of the pivotable hoisting arm 16 to the platform 5 in relation to an anchor point 34 on the wind power plant 3 for the wire rope 31 of the hoist 15 placed on the hoisting arm 16 at the rear part or back end 9 of the platform 5.

In an embodiment of the invention the pivotable hoisting arm 16 is connected to the platform by a further arm or extended frame (not shown), placing the pivoting joints 17, 18 in a position on an outer side of the bar arrangement 11, 12 connecting the platform 5 with the tower guiding means 10.

This makes it possible to compensate for a possible uneven drag from the wire rope 31 if the anchor point 34 on the wind power plant 3 is placed offset in relation to a vertical axis along which the platform 5 is moved when mowing up or down.

In an embodiment of the invention, the hoisting arm 16 comprises a first frame part 19 and a second frame part 20, which first frame part 19 is connected to the upper pivot joint 17 in one end and to the second frame part 20 in an opposite end, the second frame part 20 is in one end connected to the first frame part 19 and in an opposite end to the lower pivot joint 18, the first frame part 19 and/or second frame part 20 is adjustable in length.

This also makes it possible to compensate for an uneven drag from the wire rope 31 if the anchor point 34 on the wind power plant 3 is placed offset in relation to a vertical axis along which the platform 5 is moved when mowing up or down.

In an embodiment of the invention the first and second frame parts 19, 20 is provided with a wire pulley 21 for guiding a wire rope (not shown) connected to the hoisting means 15.

In an embodiment of the invention the hoisting arm 16 is connected to the platform 5 by an actuator (not shown) in such a way that the position of the hoisting arm 16 can be adjusted by the actuator.

The tower guide means 10 is connected to a bar arrangement 11, 12, which bar arrangement comprises one or more bars 11, 12.

The tower guide means 10 comprises wheel arrangements or similar arrangements for movement up and down along the tower with a low friction in the movement direction.

The bar or bars 11, 12 is displaceable in relation to the platform 5 in order to adjust the distance of the platform 5 from the tower 4 of the wind power plant 3 in such a way the platform 5 can be placed in a distance from the tower 3 being capable of surrounding or at least partly surround a blade 2 of a wind turbine in order to carry persons and or machinery enabling maintenance work on the blade 2.

In an embodiment the bars 11, 12 can be angular displaced in relation to each other whereby the platform 5 changes its configuration from square-shaped or rectangular to another shape.

When displacing the bars 11, 12 in relation to the platform 5 and when changing position of the platform 5 in lengthwise direction of the blade, the direction of the resulting forces changes. Having the pivotable arm 16 following the direction of the resulting forces, reduces the risk of an uneven load on the platform 5 caused by a skewed pull from the wire rope 31 connected to the hoist 15 placed on the pivotable arm 16.

The blade access arrangement 1 is hoisted by hoisting means 13, 14, 15 connected to the platform 5. A hoisting device could for example be a winding gear or an electric powered wire rope hoist.

Figure 1 shows the blade access arrangement 1 in a position, in which the platform 5 is near the tower 4. The blade access arrangement 1 is suspended by three wire ropes 31, 32, 33 from the nacelle 30. Two of the wire ropes are visible only, which is due to one of the wire ropes 33 being located behind another wire rope 32. The blade access arrangement 1 has three suspension points, each represented by an electric powered wire rope hoist 13, 14, 15 attached to the platform 5. Two hoists are placed at each side 6, 7 of the platform 5 and a third hoist 15 is attached to the pivotable hoisting arm 16.

The tower guide means 10 are connected to the platform 5 by means of a bar arrangement 11, 12 which has, in the embodiment shown in figure 3, two lattice bars 11, 12 which can have a variable length. The variable length can be obtained by telescopic bars sliding into each other. The bars 11, 12 can be moved and retained in selected positions in relation to the platform 5 in order to position the platform 5 in a specific distance from the tower 4 to be able to perform maintenance or inspection of the blade 2.

When the platform 5 is in a position close to the tower 4 as shown in figures 1 - 3, the pivotable hoisting arm 16 is positioned at an angle close to the back end 9 of the platform 5. Here the angle can be for example between 10 and 30 degrees.

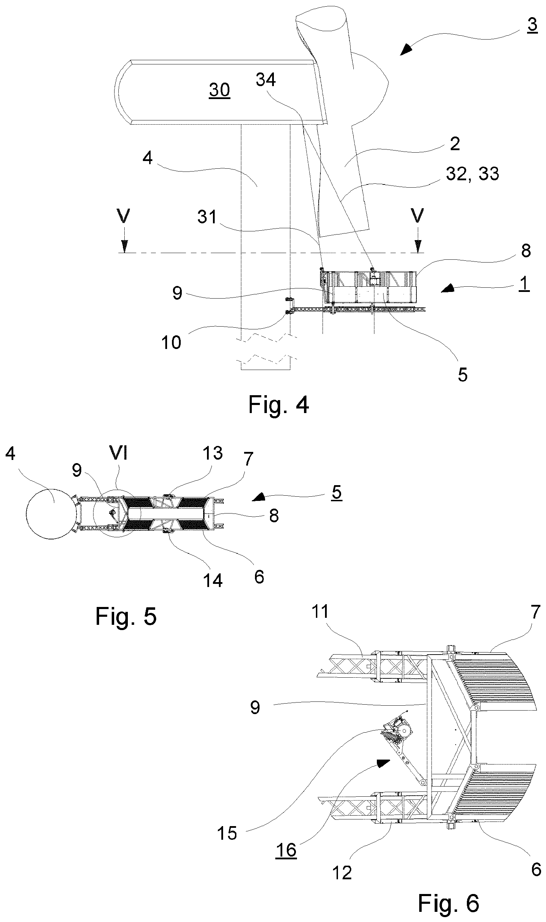

Moving the platform 5 away from the tower 4 as shown in figures 4-6, the pivotable hoisting arm 16 is positioned at an angle between to the back end 9 of the platform 5 and a line along the side 6 of the platform 5. Here the angle can be for example between 25 and 55 degrees.

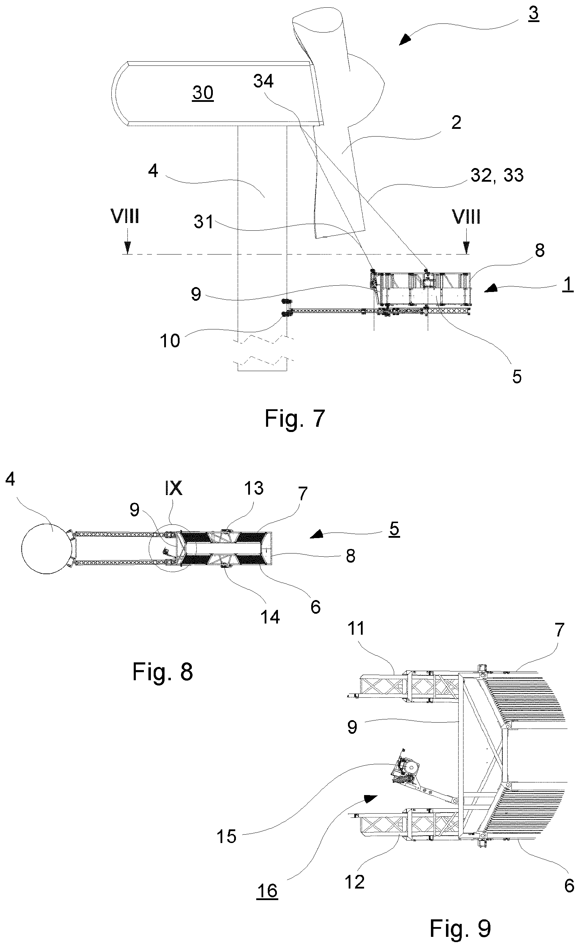

Moving the platform 5 further away from the tower 4 as shown in figures 7 - 9, the pivotable hoisting arm 16 is positioned at an angle close to a line along the side 6 of the platform 5. Here the angle can be for example between 45 and 80 degrees.

The closer the platform 5 is to the tower 4, the smaller is the angle between the hoisting arm 16 and the back end 9 of the platform 5 and the farther away the platform 5 is from the tower 4 the greater is the angle between the rear end 9 of the platform 5 and the hoisting arm 16.

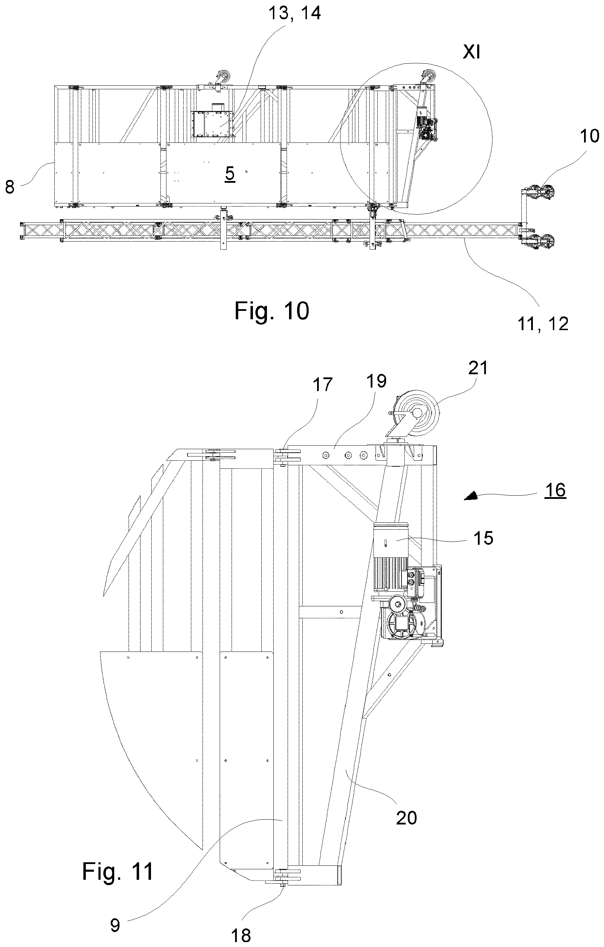

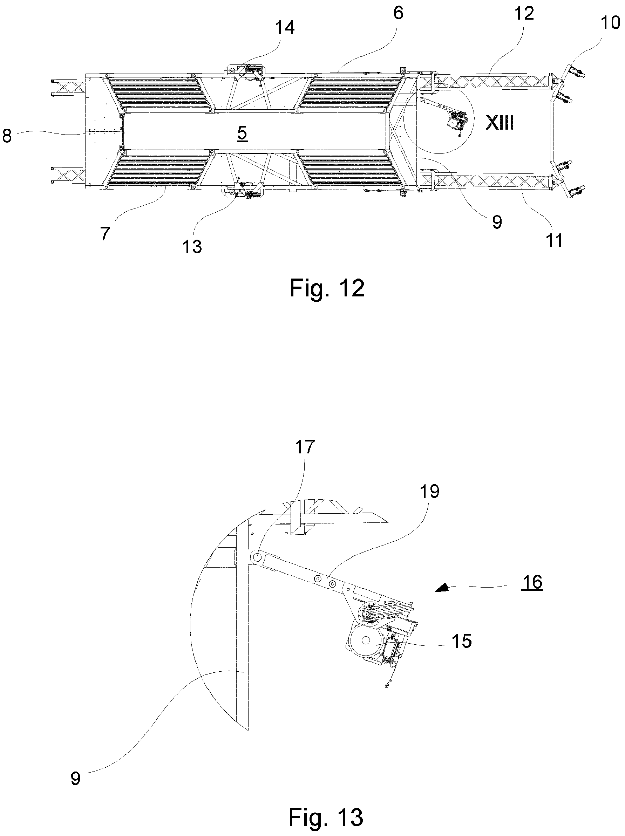

Figure 10- 14 illustrates the platform with the pivotable hoisting arm in a larger view.

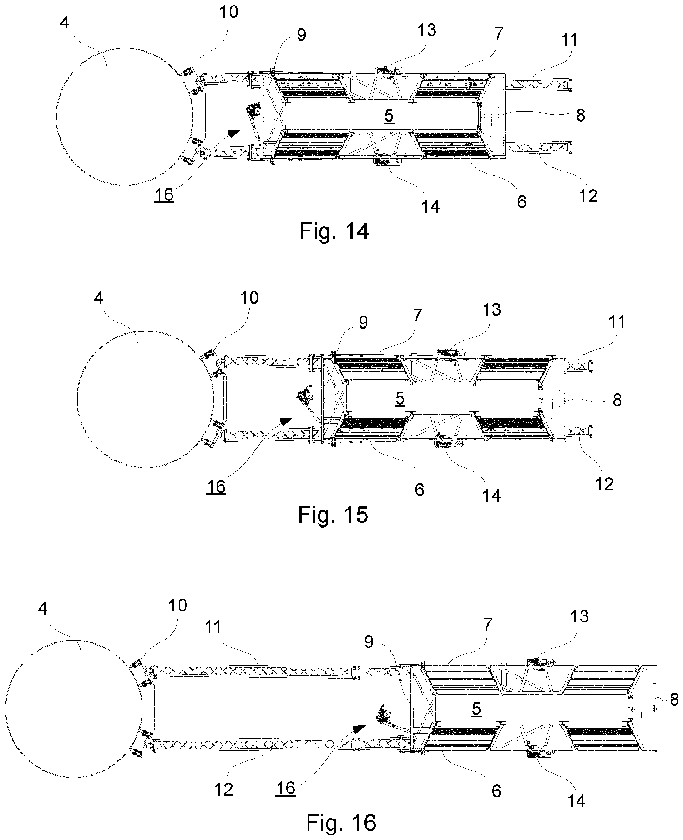

Figure 14 - 16 illustrates also the movement of the pivotable hoisting arm 16 depending on the position of the platform 5 in relation to the distance from the tower and thereby from an anchor point 34 placed on the nacelle 30.

In an embodiment of the invention the hoisting arrangement comprises further suspension points placed at the platform, preferably at least three suspension points 13, 14, 15, one 15 at the back end 9 of the platform 5 and two at the platform sides 6, 7. Two of the platform suspensions are typically placed opposite each other on the sides 6, 7 of the platform 5. The suspension points at the sides of the platform 5 can be stationary suspension points or suspension points movable along the sides 6, 7 of the platform 5.

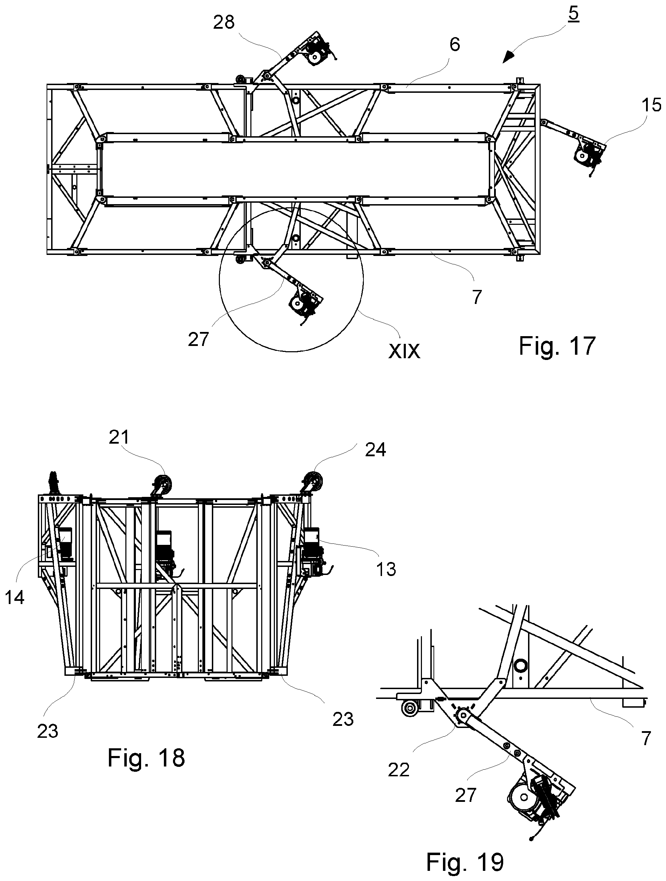

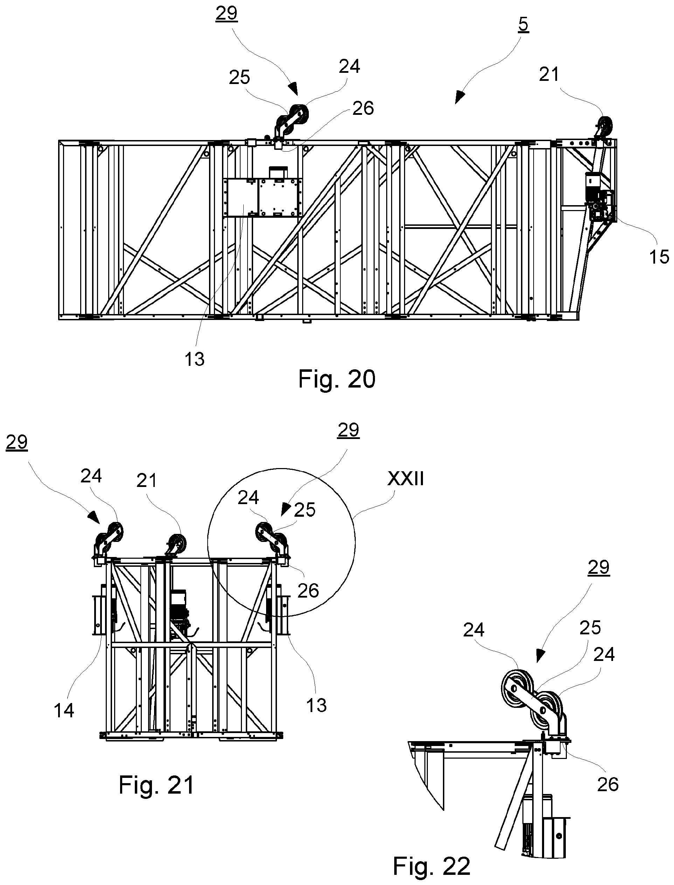

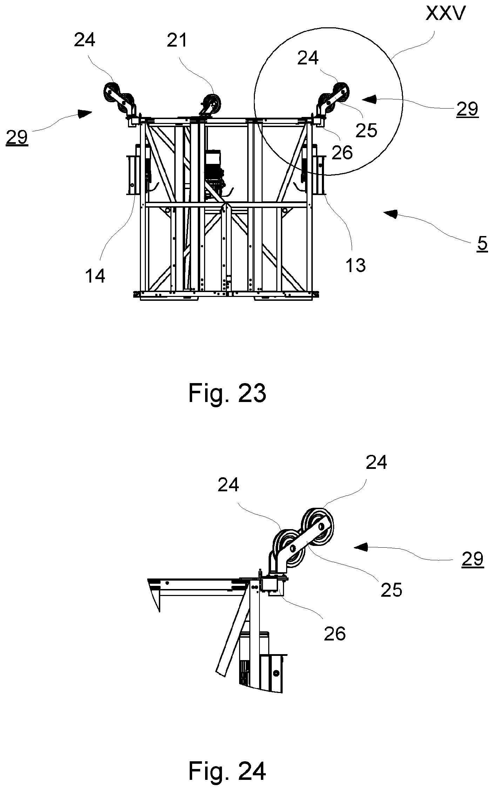

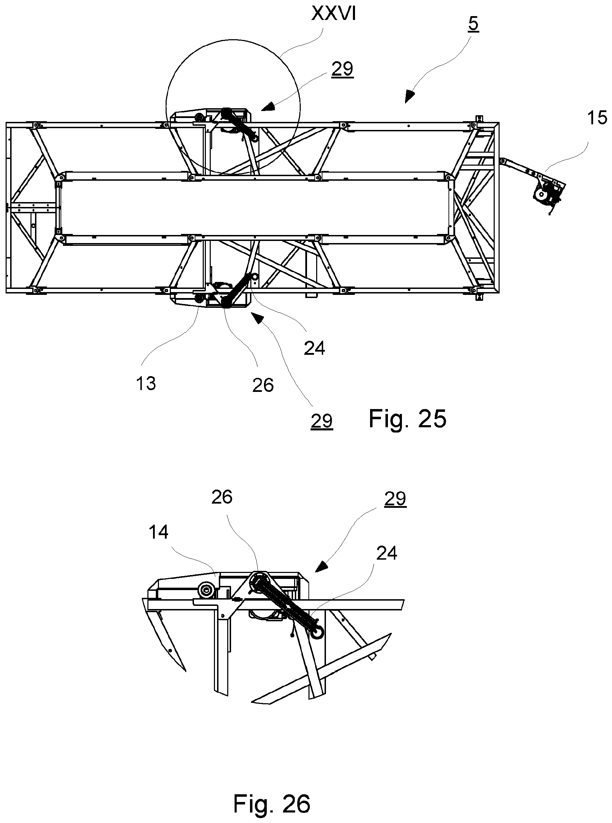

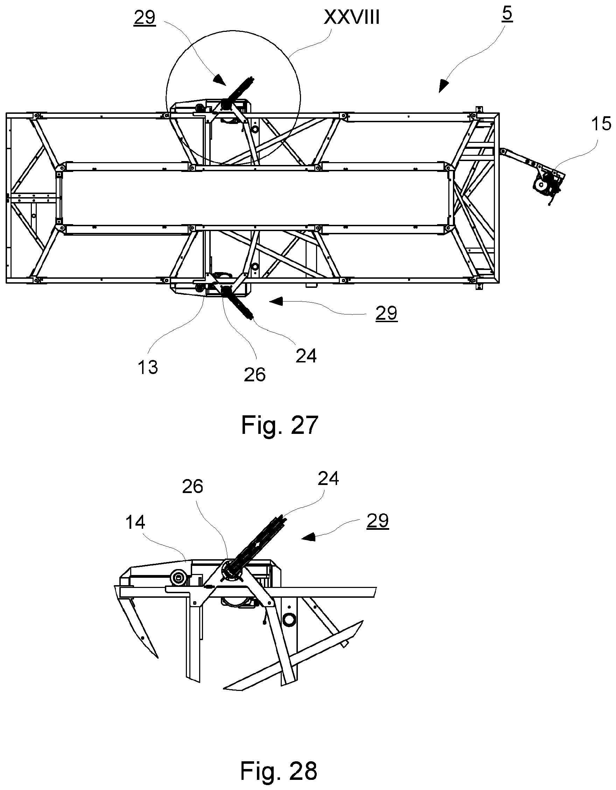

In embodiments, for example shown in figures 10, 12, 14 - 28 the hoisting means or platform suspensions 13, 14 are placed on each side 6, 7 of the platform 5 and connected pivotably to the respective sides 6, 7 of the platform 5 by pivotable arms 27, 28.

In an embodiment, the hoisting means 13, 14 are placed on pivotable arms 27, 28, which arms 27, 28 are connected pivotably to the respective sides 6, 7 of the platform 5 by upper 22 and a lower 23 pivoting joints for at least partly pivoting around a substantially vertical axis through the upper and lower pivoting points 22, 23.

The pivotable arm 27, 28 can be of the same type as the pivotable arm 15.

In an embodiment, the pivotable arms 27, 28 with hoisting means 13, 14, can pivot freely in a direction guided by the wire rope to which the hoisting means 13, 14 are attached.

Hereby it is possible to provide improved stability of the platform in that the arms 27, 28 follows the angle of the wire rope in such a way that resulting forces from the wire rope coupled to the hoisting means 13, 14, determines the position of the arms 27, 28 in relation to the platform 5.

In an alternative embodiment, movement of the pivotable arms 27, 28 in relation to the platform 5 is guided by an actuator (not shown) connected between the arms 27, 28 and the platform 5.

Hereby it is possible to change distance between the wire ropes supporting the central part of the platform and give a further possibility of manoeuvring the platform in relation to the rotor blade.

In the embodiments mentioned above, a wire pulley 24 is provided for guiding a wire rope (not shown) connected to the hoisting means 13, 14.

In an embodiment, pivoting joints 29 are placed above the sides 6, 7 of the platform 5, formed as swivel joints 26.

Here at least one pulley or rope wheel 24 are provided in an arm 25, formed by two parallel bars, for example of flat iron, which bars extend upwardly and in an angle away from an axis vertical through the pivot point 26.

The swivel joint 26 makes it possible for the arm 25 to swivel around an axis extending through the joint 26 in a substantial vertical direction.

Hereby is achieved, that the pivoting joints are placed above the sides 6, 7 of the platform 5 giving improved stability and that the arm 25 follows the angle of the wire rope in such a way that resulting forces from the wire rope coupled to the hoisting means 13, 14, determines the position of the arm 25 in relation to the platform 5.

The scope of protection is defined by the appended claims.

## Claims

1. Blade access arrangement (1) for a rotor blade (2) of a wind power plant (3) having a tower (4), the arrangement (1) comprising a platform (5) having two sides (6, 7) extending from a front end (8) to a back end (9) of the platform (5) tower guide means (10) for guiding the platform (5) against the tower (4), a bar arrangement (11, 12) comprising one or more bars connecting the platform (5) with the tower guiding means (10) and a hoisting arrangement for hoisting the blade access arrangement (1) up and down, which hoisting arrangement comprises a pair of electric powered wire rope hoists (13, 14) connected to a wire rope, and placed on each side (6, 7) of the platform (5), **characterized in that** the hoisting arrangement (13, 14) comprises a further electric powered wire rope hoist (15) connected to a wire rope, and placed on a hoisting arm (16), which arm (16) is connected pivotably to the back end (9) of the platform (5), the back end (9) of the platform (5) being the end closest to the tower guide means (10).

2. Blade access arrangement according to claim 1, **characterized in that** the hoisting arm (16) is connected pivotably to the back end (9) of the platform (5) by an upper (17) and a lower (18) pivoting joint for at least partly pivoting around a substantially vertical axis through the upper and lower pivoting points (17, 18).

3. Blade access arrangement according to any one of the claims 1 or 2, **characterized in that** the pivotable hoisting arm (16) is connected to the platform (5) in a corner area of the back end (9) of the platform.

4. Blade access arrangement according to any one of the claims 1 to 3, **characterized in that** the upper and lower pivoting joints (17, 18) are slidable connected to the back end (9) of the platform (5) in such a way that the pivoting joints (17, 18) can be positioned in a position between corners of the back end (9) of the platform (5).

5. Blade access arrangement according to claim 4, **characterized in that** the slidable connection is provided with a locking means for locking the pivoting joints (17, 18) to the back end (9) of the platform (5) in such a way that sliding is blocked.

6. Blade access arrangement according to any one of the claims 1 to 5, **characterized in that** the hoisting arm (16) is hinged in the pivoting joints (17, 18) in such a way, that resulting forces from a wire rope coupled to the hoisting means (15), determines a position of the hoisting arm (16).

7. Blade access arrangement according to any one of the claims 1 or 2, **characterized in that** the pivotable hoisting arm (16) is connected to the platform (5) in a center area between corners of the back end (9) of the platform (5).

8. Blade access arrangement according to any one of the claims 1 or 2, **characterized in that** the pivotable hoisting arm (16) is connected to the platform (5) by a further arm or extended frame, placing the pivoting joints (17, 18) in a position on an outer side of the bar arrangement (11, 12) connecting the platform (5) with the tower guiding means (10).

9. Blade access arrangement according to any one of the claims 1 to 8, **characterized in that** the hoisting arm (16) comprises a first frame part (19) and a second frame part (20), which first frame part (19) is connected to the upper pivot joint (17) in one end and to the second frame part (20) in an opposite end, the second frame part (20) is in one end connected to the first frame part (19) and in an opposite end to the lower pivot joint (18), the first frame part (19) and/or second frame part (20) is adjustable in length.

10. Blade access arrangement according to claim 9, **characterized in that** the first and second frame parts (19, 20) is provided with a wire pulley for guiding a wire rope connected to the hoisting means (15).

11. Blade access arrangement according to any one of the claims 1 to 10, **characterized in that** the hoisting arm (16) is connected to the platform (5) by an actuator.

12. Blade access arrangement according to any one of the claims 1 to 11, **characterized in that** the hoisting means (13, 14) placed on each side (6, 7) of the platform (5) are connected pivotably to the respective sides (6, 7) of the platform (5).

13. Blade access arrangement according to claim 12, **characterized in that** the hoisting means (13, 14) are placed on pivotable arms (27, 28), which arms (27, 28) are connected pivotably to the respective sides (6, 7) of the platform (5) by upper (22) and a lower (23) pivoting joints for at least partly pivoting around a substantially vertical axis through the upper and lower pivoting points (22, 23).

14. Blade access arrangement according to claim 12, **characterized in that** the pivotable arms (27, 28) are provided with an actuator connected between the arms (27, 28) and the platform (5).

15. Blade access arrangement according to any one of the claims 1 to 11, **characterized in that** the hoisting means (13, 14) placed on each side (6, 7) of the platform (5) and pivoting joints (29) formed as swivel joints (26), are placed above the sides (6, 7) of the platform (5).

## Patentansprüche

1. Schaufelzugangsanordnung (1) für eine Rotorschaufel (2) einer Windkraftanlage (3) mit einem Turm (4), wobei die Anordnung (1) Folgendes umfasst: eine Plattform (5) mit zwei Seiten (6, 7), die sich von einem vorderen Ende (8) zu einem hinteren Ende (9) der Plattform (5) erstrecken, ein Turmführungsmittel (10) zum Führen der Plattform (5) gegen den Turm (4), eine Stangenanordnung (11, 12), umfassend eine oder mehrere Stangen, die die Plattform (5) mit dem Turmführungsmittel (10) verbinden, und eine Hebeanordnung zum Anheben und Absenken der Schaufelzugangsanordnung (1), wobei die Hebeanordnung ein Paar elektrisch angetriebener Seilzüge (13, 14) umfasst, die mit einem Drahtseil verbunden sind und auf jeder Seite (6, 7) der Plattform (5) platziert sind, **dadurch gekennzeichnet, dass** die Hebeanordnung (13, 14) einen weiteren elektrisch angetriebenen Seilzug (15) umfasst, der mit einem Drahtseil verbunden ist und an einem Hebearm (16) platziert ist, wobei der Arm (16) schwenkbar mit dem hinteren Ende (9) der Plattform (5) verbunden ist, wobei das hintere Ende (9) der Plattform (5) das Ende ist, das dem Turmführungsmittel (10) am nächsten ist.

2. Schaufelzugangsanordnung nach Anspruch 1, **dadurch gekennzeichnet, dass** der Hebearm (16) durch ein oberes (17) und ein unteres (18) Drehgelenk schwenkbar mit dem hinteren Ende (9) der Plattform (5) verbunden ist, um sich zumindest teilweise um eine im Wesentlichen vertikale Achse durch den oberen und unteren Drehpunkt (17, 18) zu drehen.

3. Schaufelzugangsanordnung nach einem der Ansprüche 1 oder 2, **dadurch gekennzeichnet, dass** der schwenkbare Hebearm (16) in einem Eckenbereich des hinteren Endes (9) der Plattform mit der Plattform (5) verbunden ist.

4. Schaufelzugangsanordnung nach einem der Ansprüche 1 bis 3, **dadurch gekennzeichnet, dass** die oberen und unteren Drehgelenke (17, 18) mit dem hinteren Ende (9) der Plattform (5) gleitbar verbunden sind, in einer Weise, dass die Drehgelenke (17, 18) in einer Position zwischen Ecken des hinteren Endes (9) der Plattform (5) positioniert werden können.

5. Schaufelzugangsanordnung nach Anspruch 4, **dadurch gekennzeichnet, dass** die gleitbare Verbindung mit einem Verriegelungsmittel zum Verriegeln der Drehgelenke (17, 18) am hinteren Ende (9) der Plattform (5) versehen ist, in einer Weise, dass Gleiten blockiert ist.

6. Schaufelzugangsanordnung nach einem der Ansprüche 1 bis 5, **dadurch gekennzeichnet, dass** der Hebearm (16) in den Drehgelenken (17, 18) in einer Weise angelenkt ist, dass resultierende Kräfte von einem mit dem Hebemittel (15) gekoppelten Drahtseil eine Position des Hebearms (16) bestimmen.

7. Schaufelzugangsanordnung nach einem der Ansprüche 1 oder 2, **dadurch gekennzeichnet, dass** der schwenkbare Hebearm (16) in einem mittleren Bereich zwischen Ecken des hinteren Endes (9) der Plattform (5) mit der Plattform (5) verbunden ist.

8. Schaufelzugangsanordnung nach einem der Ansprüche 1 oder 2, **dadurch gekennzeichnet, dass** der schwenkbare Hebearm (16) durch einen weiteren Arm oder einen erweiterten Rahmen, der die Drehgelenke (17, 18) in einer Position an einer äußeren Seite der Stangenanordnung (11, 12) platziert, die die Plattform (5) mit dem Turmführungsmittel (10) verbindet, mit der Plattform (5) verbunden ist.

9. Schaufelzugangsanordnung nach einem der Ansprüche 1 bis 8, **dadurch gekennzeichnet, dass** der Hebearm (16) einen ersten Rahmenteil (19) und einen zweiten Rahmenteil (20) umfasst, wobei der erste Rahmenteil (19) in einem Ende mit dem oberen Drehgelenk (17) und in einem gegenüberliegenden Ende mit dem zweiten Rahmenteil (20) verbunden ist, wobei der zweite Rahmenteil (20) in einem Ende mit dem ersten Rahmenteil (19) und in einem gegenüberliegenden Ende mit dem unteren Drehgelenk (18) verbunden ist, wobei der erste Rahmenteil (19) und/oder der zweite Rahmenteil (20) in der Länge einstellbar sind.

10. Schaufelzugangsanordnung nach Anspruch 9, **dadurch gekennzeichnet, dass** der erste und der zweite Rahmenteil (19, 20) mit einer Riemenscheibe zum Führen eines mit dem Hebemittel (15) verbundenen Drahtseils versehen ist.

11. Schaufelzugangsanordnung nach einem der Ansprüche 1 bis 10, **dadurch gekennzeichnet, dass** der Hebearm (16) durch einen Aktuator mit der Plattform (5) verbunden ist.

12. Schaufelzugangsanordnung nach einem der Ansprüche 1 bis 11, **dadurch gekennzeichnet, dass** die auf jeder Seite (6, 7) der Plattform (5) platzierten Hebemittel (13, 14) schwenkbar mit den entsprechenden Seiten (6, 7) der Plattform (5) verbunden sind.

13. Schaufelzugangsanordnung nach Anspruch 12, **dadurch gekennzeichnet, dass** die Hebemittel (13, 14) an schwenkbaren Armen (27, 28) platziert sind, wobei die Arme (27, 28) durch ein oberes (22) und ein unteres (23) Drehgelenk schwenkbar mit den entsprechenden Seiten (6, 7) der Plattform (5) verbunden sind, um sich zumindest teilweise um eine im Wesentlichen vertikale Achse durch den oberen und unteren Drehpunkt (22, 23) zu drehen.

14. Schaufelzugangsanordnung nach Anspruch 12, **dadurch gekennzeichnet, dass** die schwenkbaren Arme (27, 28) mit einem Aktuator versehen sind, der zwischen den Armen (27, 28) und der Plattform (5) verbunden ist.

15. Schaufelzugangsanordnung nach einem der Ansprüche 1 bis 11, **dadurch gekennzeichnet, dass** die Hebemittel (13, 14), die auf jeder Seite (6, 7) der Plattform (5) platziert sind, und Drehgelenke (29), die als Schwenkgelenke (26) ausgebildet sind, über den Seiten (6, 7) der Plattform (5) platziert sind.

## Revendications

1. Agencement (1) d'accès à une pale destiné à une pale de rotor (2) d'une centrale éolienne (3) ayant une tour (4), l'agencement (1) comprenant une plateforme (5) ayant deux côtés (6, 7) s'étendant d'une extrémité avant (8) à une extrémité arrière (9) de la plateforme (5), des moyens de guidage de tour (10) servant à guider la plateforme (5) contre la tour (4), un agencement de barres (11, 12) comprenant une ou plusieurs barres reliant la plateforme (5) avec les moyens de guidage de tour (10) et un agencement de levage pour lever l'agencement d'accès à la pale (1) vers le haut et vers le bas, ledit agencement de levage comprenant une paire de palans à câble électriques (13, 14) reliés à un câble et placés de chaque côté (6, 7) de la plateforme (5), **caractérisé en ce que** l'agencement de levage (13, 14) comprend un autre palan à câble électrique (15) relié à un câble et placé sur un bras de levage (16), ledit bras (16) est relié de manière pivotante à l'extrémité arrière (9) de la plateforme (5), l'extrémité arrière (9) de la plateforme (5) étant l'extrémité la plus proche des moyens de guidage de tour (10).

2. Agencement d'accès à une pale selon la revendication 1, **caractérisé en ce que** le bras de levage (16) est relié de manière pivotante à l'extrémité arrière (9) de la plateforme (5) par une articulation pivotante supérieure (17) et une articulation pivotante inférieure (18) pour pivoter au moins partiellement autour d'un axe sensiblement vertical à travers les points de pivotement supérieur et inférieur (17, 18).

3. Agencement d'accès à une pale selon l'une quelconque des revendications 1 ou 2, **caractérisé en ce que** le bras de levage pivotant (16) est relié à la plateforme (5) dans une zone angulaire de l'extrémité arrière (9) de la plateforme.

4. Agencement d'accès à une pale selon l'une quelconque des revendications 1 à 3, **caractérisé en ce que** les articulations pivotantes supérieure et inférieure (17, 18) sont reliées de manière coulissante à l'extrémité arrière (9) de la plateforme (5) de telle sorte que les articulations pivotantes (17, 18) peuvent être positionnées entre les coins de l'extrémité arrière (9) de la plateforme (5).

5. Agencement d'accès à une pale selon la revendication 4, **caractérisé en ce que** la connexion coulissante est pourvue d'un moyen de verrouillage pour bloquer les articulations pivotantes (17, 18) à l'extrémité arrière (9) de la plateforme (5) de manière à bloquer le coulissement.

6. Agencement d'accès à une pale selon l'une quelconque des revendications 1 à 5, **caractérisé en ce que** le bras de levage (16) est articulé dans les articulations pivotantes (17, 18) de telle sorte que les forces résultantes d'un câble couplé au moyen de levage (15) déterminent une position du bras de levage (16).

7. Agencement d'accès à une pale selon l'une quelconque des revendications 1 ou 2, **caractérisé en ce que** le bras de levage pivotant (16) est relié à la plateforme (5) dans une zone centrale entre les coins de l'extrémité arrière (9) de la plateforme (5).

8. Agencement d'accès à une pale selon l'une quelconque des revendications 1 ou 2, **caractérisé en ce que** le bras de levage pivotant (16) est relié à la plateforme (5) par un autre bras ou un cadre étendu, plaçant les articulations pivotantes (17, 18) dans une position sur un côté extérieur de l'agencement de barres (11, 12) reliant la plateforme (5) aux moyens de guidage de tour (10) .

9. Agencement d'accès à une pale selon l'une quelconque des revendications 1 à 8, **caractérisé en ce que** le bras de levage (16) comprend une première partie de cadre (19) et une deuxième partie de cadre (20), la première partie de cadre (19) étant reliée à l'articulation pivotante supérieure (17) à une extrémité et à la deuxième partie de cadre (20) à une extrémité opposée, la deuxième partie de cadre (20) étant reliée à une extrémité à la première partie de cadre (19) et à une extrémité opposée à l'articulation pivotante inférieure (18), la première partie de cadre (19) et/ou la deuxième partie de cadre (20) pouvant être réglées en longueur.

10. Agencement d'accès à une pale selon la revendication 9, **caractérisé en ce que** la première et la deuxième partie de cadre (19, 20) sont pourvues d'une poulie à câble pour guider un câble relié au moyen de levage (15).

11. Agencement d'accès à une pale selon l'une quelconque des revendications 1 à 10, **caractérisé en ce que** le bras de levage (16) est relié à la plateforme (5) par un actionneur.

12. Agencement d'accès à une pale selon l'une quelconque des revendications 1 à 11, **caractérisé en ce que** les moyens de levage (13, 14) placés sur chaque côté (6, 7) de la plateforme (5) sont reliés de manière pivotante aux côtés respectifs (6, 7) de la plateforme (5).

13. Agencement d'accès à une pale selon la revendication 12, **caractérisé en ce que** les moyens de levage (13, 14) sont placés sur des bras pivotants (27, 28), lesquels bras (27, 28) sont reliés de manière pivotante aux côtés respectifs (6, 7) de la plateforme (5) par des articulations pivotantes supérieure (22) et inférieure (23) pour pivoter au moins partiellement autour d'un axe sensiblement vertical à travers les points de pivotement supérieur et inférieur (22, 23).

14. Agencement d'accès à une pale selon la revendication 12, **caractérisé en ce que** les bras pivotants (27, 28) sont dotés d'un actionneur relié entre les bras (27, 28) et la plateforme (5).

15. Agencement d'accès à une pale selon l'une quelconque des revendications 1 à 11, **caractérisé en ce que** les moyens de levage (13, 14) placés de chaque côté (6, 7) de la plateforme (5) et les articulations pivotantes (29) formées comme des articulations pivotantes (26), sont placés au-dessus des côtés (6, 7) de la plateforme (5).
